# EUROPEAN PATENT SPECIFICATION

(11) **EP 2 336 589 B1**
(45) Date of publication and mention of the grant of the patent: **10.09.2014**
(21) Application number: 09817813.0
(22) Date of filing: 30.09.2009
(51) Int. Cl.: F16D 23/14

(54) **CLUTCH RELEASE BEARING DEVICE**
LAGERVORRICHTUNG MIT KUPPLUNGSLÖSUNGSMECHANISMUS
ENSEMBLE BUTÉE DE DÉBRAYAGE

(30) Priority: 01.10.2008 JP 2008256562; 01.10.2008 JP 2008256563
(43) Date of publication of application: 22.06.2011
(73) Proprietor: JTEKT Corporation, Osaka-shi Osaka 542-8502 (JP); Aisin Seiki Kabushiki Kaisha, Aichi 448-8650 (JP)
(72) Inventor: SUZUKI, Akiyuki, Osaka-shi Osaka 542-8502 (JP); KAWAMURA, Motoshi, Osaka-shi Osaka 542-8502 (JP); SUGIMOTO, Takashi, Osaka-shi Osaka 542-8502 (JP); NAGASAKA, Hiroyuki, Kariya-shi Aichi 448-8650 (JP); KAGIYAMA, Junji, Kariya-shi Aichi 448-8650 (JP); TAKASHI, Yukihisa, Kariya-shi Aichi 448-8650 (JP); ONIMARU, Yoshiyuki, Kariya-shi Aichi 448-8650 (JP)
(74) Representative: TBK
(86) International application number: PCT/JP2009/067035
(87) International publication number: WO 2010/038781

(56) References cited:
- DE-U1- 29 608 918
- GB-A- 2 166 511
- JP-A- 2004 019 745
- JP-U- 50 071 650
- JP-U- 59 191 428
- JP-U- 61 036 734
- JP-U- 62 063 420
- JP-Y1- 44 027 288
- US-A- 5 964 333

## Description

The present invention relates to a clutch release bearing apparatus according to the preamble of claim 1, the features of which are known from document US 5 964 333 A.

In the related art, as a clutch release bearing apparatus having a clutch release bearing and a cover member configured to cover an outer peripheral surface of an outer ring of the clutch release bearing and hold the same, for example, there is an apparatus having a structure disclosed in document JP-UM-A-6-28359.

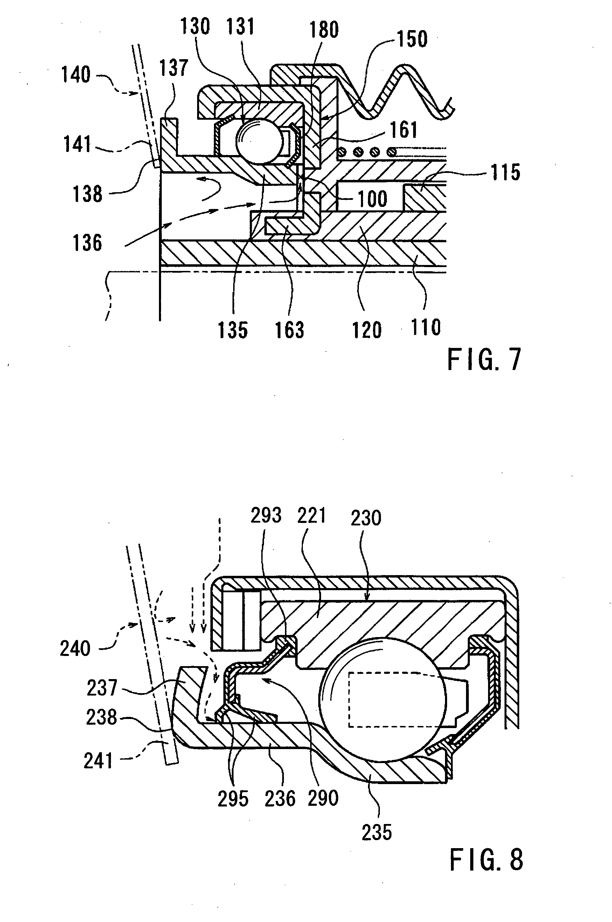

This apparatus includes an internal cylinder body 110, an external cylinder body 115, an annular piston 120, a clutch release bearing 130, and a covering member 150 as shown in Fig. 7.

Also, the covering member 150 configured to cover an outer peripheral surface of an outer ring 131 of the clutch release bearing 130 and hold the same includes a flange portion 161 extending radially toward a center from one end surface of the outer ring 131 to one end surface of an inner ring 135 and an internal cylinder portion 163 extending from a radially inner end of the flange portion 161 along an inner peripheral surface of the inner ring 135 and being embedded in a portion near a distal end of the annular piston 120.

Also, an extending cylinder portion 136 extending in the axial direction toward a radially inside portion 141 of a diaphragm spring 140 is formed at one end of the inner ring 135 of the clutch release bearing 130, and a flange portion 137 having a pressing surface 138 which presses the radially inside portion 141 of the diaphragm spring 140 projects radially outward at an extending end of the extending cylinder portion 136.

Also, in the related art, in the clutch release bearing apparatus, for example, the one having a structure as shown in Fig. 8 is known.

In this structure, an extending cylinder portion 236 extending in the axial direction toward a radially inside portion 241 of a diaphragm spring 240 is formed at one end of an inner ring 235 of a clutch release bearing 230, and a flange portion 237 having a pressing surface 238 which presses the radially inside portion 241 of the diaphragm spring 240 projects radially outward at an extending end of the extending cylinder portion 236.

Also, a sealing member 290 is assembled between an outer ring 231 of the clutch release bearing 230 and the extending cylinder portion 236 of the inner ring 235.

The sealing member 290 is provided at a radially outer end portion thereof with an radially outside fixed portion 293 to be fixedly press-fitted to an inner peripheral surface of an end portion of the outer ring 231, and at a radially inner end portion thereof with a bifurcated contact lip 295 coming into resilient sliding contact with an outer peripheral surface of the extending cylinder portion 236 of the inner ring 235.

Also, the clutch release bearing apparatus of so-called an inner ring rotating system having the structure as described above is disclosed in, for example, in document JP-A-2001-280367,

Incidentally, in the clutch release bearing apparatus of the inner ring rotating system shown in Fig. 7 in the related art, if muddy water, dust, or dirt, etc. enter a clutch housing (not shown) while the vehicle is moving, the muddy water or the like may be splashed around by the diaphragm spring 140, so that part of the splashed muddy water or the like may flow into a space surrounded by the internal cylinder body 110, the distal end portion of the annular piston 120, the flange portion 161 of the covering member 150, and the inner peripheral surface of the inner ring 135 (see arrows in Fig. 7).

Then, the muddy water or the like flowed into the space may enter a gap 100 between the flange portion 161 of the covering member 150 and an end surface of the inner ring 135. In particular, when the inner ring 135 is rotated, the muddy water or the like tends to enter the gap 100 by the action of a centrifugal force thereof

Then, a sliding contact portion of a sealing member 180 is worn noticeably by mud components in the muddy water or the like entered into the gap, and hence the sealing performance is lowered.

Also, in the clutch release bearing apparatus of the inner ring rotating system shown in Fig. 8 in the related art, if muddy water, dust, or dirt, etc. enter a clutch housing (not shown) while the vehicle is moving, the muddy water, the dust, the dirt or the like may fly in some directions by the diaphragm spring 240 and enter toward the extending cylinder portion 236 of the inner ring 235 (see arrows in Fig. 8).

Therefore, it is necessary to improve watertightness and dustproof property by enhancing a resilient press-contact force (interference) of the bifurcated contact lip 295 of the sealing member 290 and bringing the same into sliding contact with the outer peripheral surface of the extending cylinder portion 236 of the inner ring 235.

However, when the resilient press-contact force (interference) of the contact lip 295 is enhanced, a torque loss is increased by a frictional force generated between the contact lip 295 and the outer peripheral surface of the extending cylinder portion 236 of the inner ring 235, and deterioration of lubricant such as grease or the like sealed in a bearing is accelerated by heat generated by friction, whereby the lifetime of the bearing is shortened.

In addition, since the degree of tight seal of the bearing is increased, if the atmospheric temperature is increased due to the temperature rise or heat generation of an engine, the internal pressure of the bearing is increased, whereby there are probabilities of deformation of the seal and outflow of the lubricant from the seal. If a configuration in which the pressure is released when the internal pressure in the bearing is increased is employed, if the atmospheric temperature drops abruptly, the internal pressure is lowered, and hence air is sucked from the outside. At this time, if the muddy water or the like remains on the seal portion, it is also sucked, and hence the lifetime of the bearing may be shortened.

In view of such problems, an object of the present invention is to provide a clutch release bearing apparatus which can achieve an improvement of sealing property.

The object of the invention is achieved by a clutch release bearing apparatus according to claim 1. Advantageous embodiments are carried out according to the dependent claims.

A clutch release bearing apparatus according to the present invention is a clutch release bearing apparatus including: on outer ring, an inner ring, a rolling body disposed between the outer ring and the inner ring, characterized in that
the outer ring includes a radially outside flange portion extending from one end surface of the outer ring over one end of the inner ring toward a radially center side, an intermediate cylinder portion extending from a radially inner end of the radially outside flange portion along the inner peripheral surface of the inner ring within an annular space set with respect to an inner peripheral surface of the inner ring, a bent portion bent from an end edge of the intermediate cylinder portion toward the radially center side at a predetermined radius of curvature, and a radially inside flange portion extending from an end edge of the bent portion toward the radially center side,
the inner ring is formed with an extending cylinder portion extending in an axial direction at the other end thereof, and
the inner ring includes on the inner peripheral surface thereof a cylindrical peripheral wall surface extending axially in parallel to a portion from one end side corresponding to the radially outside flange portion to an end edge of the intermediate cylindrical portion and a guiding surface formed into an inclined state or a curved state by being increased gradually in diameter from an end edge of the cylindrical peripheral wall surface toward the extending cylinder portion continuously to each other. A gap dimension of the annular space is set to a range from 0,3 mm to 0,5 mm.

The clutch release bearing apparatus may have
a center mounting portion arranged at a center portion of the radially inside flange portion and assembled to a piston of the clutch release bearing apparatus,
a cover member forming an annular space in which an external cylinder of the clutch release bearing apparatus can be arranged between the intermediate cylinder portion and the piston,

The muddy water or the like that flows from the side of the radially inside flange portion along the bent portion flows toward the distal end side of the extending cylinder portion of the inner ring by being guided by the guiding surface of the inner peripheral surface of the inner ring. In particular, when the inner ring is rotated, it flows along the guiding surface with an action of a centrifugal force thereof and flows quickly.

In other words, in cooperation of the bent portion of the radially inside flange portion and the guiding surface of the inner peripheral surface of the inner ring, the muddy water or the like can be guided toward the distal end side of the extending cylinder portion of the inner ring.

Consequently, the entry of the muddy water or the like into the annular space set between the inner peripheral surface of the inner ring and the intermediate cylinder portion can be restrained, so that improvement of watertightness is achieved.

In the clutch release bearing apparatus a starting point of the guiding surface of the inner peripheral surface of the inner ring on the side of the cylindrical peripheral wall surface can be set to the same position as a bending starting point of the bent portion on the side of the intermediate cylinder portion or on the back side thereof in the axial direction.

In the configuration as described above, the muddy water or the like flowing from the radially inside flange portion along the bent portion can be desirably guided by the guiding surface of the inner ring, and the effect of preventing the entry of the muddy water or the like into the annular space between the inner peripheral surface of the inner ring and the intermediate cylinder portion.

The clutch release bearing apparatus may also have another cylindrical peripheral wall surface having a diameter larger than the cylindrical peripheral wall surface of the inner ring being formed on an inner peripheral surface of the extending end of the extending cylinder portion, and
the guiding surface continuously connecting the both cylindrical peripheral wall surfaces, and an end point of the guiding surface, which is a boundary between the guiding surface and the another guiding surface, can be positioned at the same position as a side surface of the radially inside flange portion or on the back side thereof.

In the configuration as described above, the muddy water or the like flowing along the side surface of the radially inside flange portion and reaches the inner peripheral surface of the inner ring is guided desirably by the guiding surface and flows toward the distal end side of the extending cylinder portion of the inner ring without being hindered by the guiding surface. Consequently, the entry of the muddy water or the like into the annular space set between the inner peripheral surface of the inner ring and the intermediate cylinder portion can be restrained further desirably

In the clutch release bearing apparatus part of the cylindrical peripheral wall surface of the inner ring and part of the intermediate cylinder portion opposing thereto can be formed with a depressed portion and a projecting portion which approach with respect to each other to form a non-contact seal portion.

In the configuration as described above, granted that part of the muddy water or the like flowing from the radially inside flange portion side along the bent portion enters the annular space between the inner peripheral surface of the inner ring and an outer peripheral surface of the intermediate cylinder portion of the cover member, the muddy water or the like is stopped by the non-contact seal portion made up of the depressed portion and the projecting portion and further entry thereof can be prevented.

In the clutch release bearing apparatus the part of the cylindrical peripheral wall surface of the inner ring can be formed with a projecting portion having an inner diameter slightly larger than the outer diameter of the intermediate cylinder portion, and an outer peripheral surface of the intermediate cylinder portion to which the projecting portion opposes can be formed with a depressed portion at a gap set with respect to the inner diameter of the projecting portion.

In the configuration as described above, the non-contact seal portion made up of the projecting portion and the depressed portion can be formed easily.

In this configuration as described above, by arranging the one side surface of the sealing member in the vicinity of the inside surface of the flange portion of the inner ring, the sealing effect is produced, and further improvement of the watertightness and dustproof resistant property is achieved.

### Brief Description of the Drawings

[Fig. 1] Fig. 1 is a vertical cross-sectional view showing a clutch release bearing apparatus according to Example 1 of the present invention.
[Fig. 2] Fig. 2 is also a vertical cross-sectional view showing a clutch release bearing in an enlarged scale.
[Fig. 3] Fig. 3 is also a vertical cross-sectional view showing a relationship between an inner ring of the clutch release bearing and a second bent portion at a distal end of an intermediate cylinder portion of a cover member in an enlarged scale.
[Fig. 4] Fig.4 is a vertical cross-sectional view showing a relationship between the inner ring of the clutch release bearing and the second bent portion at the distal end of the intermediate cylinder portion of the cover member according to Example 2 of the present invention in an enlarged scale.
[Fig. 5] Fig.5 is a vertical cross-sectional view showing a relationship between the inner ring of the clutch release bearing and the second bent portion at the distal end of the intermediate cylinder portion of the cover member according to Example 3 of the present invention in an enlarged scale.
[Fig. 6] Fig. 6 is a vertical cross-sectional view showing a state in which a sealing member is assembled between the inner ring and an outer ring of the clutch release bearing apparatus according to Example 4 not falling under the scope of the present invention in an enlarged scale.
[Fig. 7] Fig. 7 is an explanatory drawing showing a clutch release bearing apparatus in the related art.
[Fig. 8] Fig. 8 is an explanatory drawing showing another clutch release bearing apparatus in the related art.

### Best Modes for Carrying Out the Invention

Modes for carrying out the present invention will be described according to examples.

### Example 1

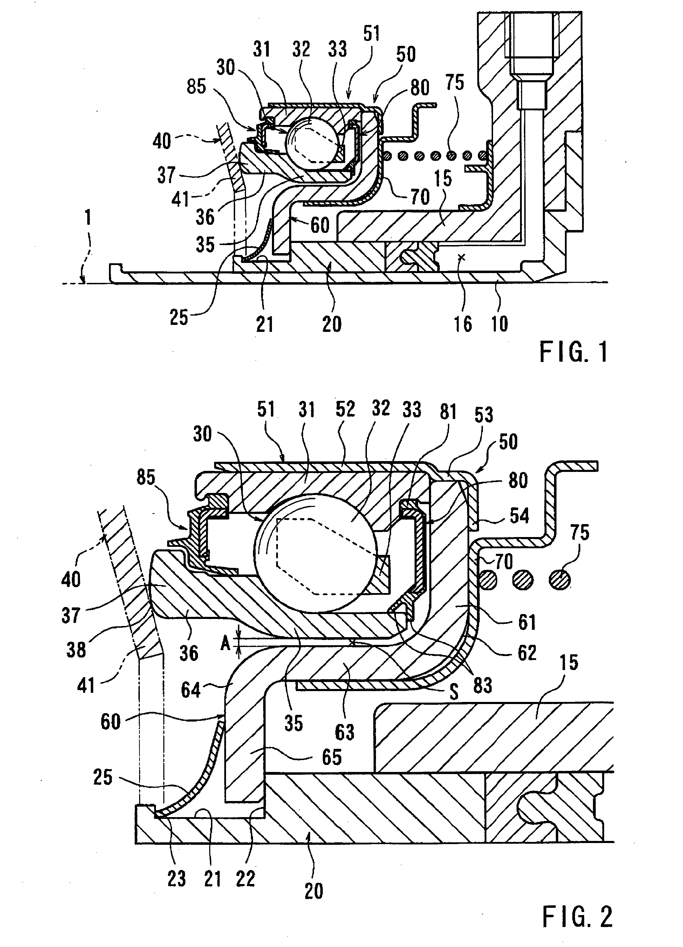

Example 1 of the present invention will be described in reference to Fig. 1 to Fig.3.

A clutch release bearing apparatus according to Example 1 exemplified here is a case of a hydraulic type clutch release bearing apparatus disposed between an annular piston operated by a hydraulic pressure and a diaphragm spring.

As shown in Fig. 1, an annular cylinder space 16 is formed between an internal cylinder body 10 to be assembled to an outer peripheral surface of a clutch main shaft 1 and an external cylinder body 15, and an annular piston 20 to be operated by the hydraulic pressure supplied into the cylinder space 16 is fitted and inserted into the cylinder space 16.

An annular groove 21 is formed on an outer peripheral surface of the distal end of a projecting portion of the annular piston 20 projecting from the cylinder space 16.

As shown in Fig. 1 and Fig. 2, the clutch release bearing apparatus disposed between the annular piston 20 and a diaphragm spring 40 includes a clutch release bearing 30 and a cover member 50.

The clutch release bearing 30 includes an outer ring 31, an inner ring 35 arranged on an inner periphery of the outer ring 31 concentrically, and balls 32 as a plurality of rolling bodies disposed so as to be capable of rolling in a state of being held in an annular space between the outer ring 31 and the inner ring 35 by a holder 33.

Also, an extending cylinder portion 36 extending in the axial direction toward an radially inside portion 41 of the diaphragm spring 40 is formed at one end (on the side opposing the diaphragm spring 40) of the inner ring 35, and a flange portion 37 having a pressing surface 38 which presses the radially inside portion 41 of the diaphragm spring 40 projects radially outward at an extending end of the extending cylinder portion 36.

As shown in Fig. 2, the cover member 50 configured to cover and hold an outer peripheral surface of the outer ring 31 of the clutch release bearing 30 includes a flange member 60 connected on the radially inside thereof to the annular piston 20, and a cylindrical body 51 configured to cover the outer peripheral surface of the outer ring 31 of the clutch release bearing 30 on the radially outside thereof.

In Example 1, the flange member 60 which constitutes the cover member 50 and the cylindrical body 51 are separate components (two components) and are assembled to each other.

The cylindrical body 51 is formed into a press work (drawing work) of a metal plate (steel plate) thinner than the flange member 60, and includes a cylindrical cylinder body portion 52 having an inner diameter slightly smaller than the outer diameter of the outer ring 31, a small-diameter cylinder end portion 53 formed at one end portion of the cylinder body portion 52 so as to have a cylinder length substantially the same as the thickness of the flange member 60 and be reduced in diameter, and having an inner diameter slightly smaller than the outer diameter of the flange member 60 (the outer diameter of a radially outside flange portion 61 described next), and an annular end wall portion 54 bent radially inward from an end edge of the small-diameter cylinder end portion 53 integrally, thereby being formed into a stepped cylindrical shape.

Then, the flange member 60 is fixedly press-fitted into the small-diameter cylinder end portion 53 of the cylindrical body 51 with a predetermined interference, and one side surface of the flange member 60 comes into abutment with an inside surface of the annular end wall portion 54.

Also, the outer ring 31 is fixedly press-fitted into the cylinder body portion 52 of the cylindrical body 51 with a predetermined interference, and the cylindrical body 51, the flange member 60, the outer ring 31 are integrated with each other in a state in which one end surface of the outer ring 31 is in abutment with the other side surface of the flange member 60.

As shown in Fig. 2, the flange member 60 is formed into a press work of a thick metal plate (steel plate), and includes the radially outside flange portion 61, a first bent portion 62, an intermediate cylinder portion 63, a second bent portion (which corresponds to a bent portion in the present invention) 64, a radially inside flange portion 65 so as to be continued integrally.

The radially outside flange portion 61 is fixedly press-fitted into the small-diameter cylinder end portion 53of the cylindrical body 51 along a radially outside surface with a predetermined interference, and extends from one end surface of the outer ring 31 of the clutch release bearing 30 to one end surface of the inner ring 35 toward a radially center side.

The first bent portion 62 is bent from a radially inner end of the radially outside flange portion 61 toward an inner peripheral surface of the inner ring 35 of the clutch release bearing 30 at a predetermined radius of curvature.

The intermediate cylinder portion 63 extends from an end edge of the first bent portion 62 along the inner peripheral surface of the inner ring 35 with an annular space S set with respect to the inner peripheral surface of the inner ring 35 of the clutch release bearing 30 and having a gap dimension A.

Also, the gap dimension A of the annular space S is preferably set to a range from 0.3 mm to 0.5 mm.

As shown in Fig. 2, the second bent portion 64 is bent from an end edge of the intermediate cylinder portion 63 toward the center side at a predetermined radius of curvature.

The radially inside flange portion 65 extends from an end edge of the second bent portion 64 toward the radially center side, and a radially inner end, which is an end of extension, is arranged with an annular gap for center alignment with a bottom surface (radially outside surface) of the annular groove 21 of the annular piston 20. Then, a disc-spring shaped aligning spring 25 is disposed between an end wall surface 23 of the annular groove 21 and the radially inside flange portion 65, and one side surface of the radially inside flange portion 65 comes into abutment with a pressing surface 22 of the annular groove 21 by a resilient force of the aligning spring 25.

In other words, a center mounting portion to be assembled to the annular piston 20 is formed at a center portion of the radially inside flange portion 65.

In other words, when a deviation in the radial direction is generated between the diaphragm spring 40 and the clutch release bearing 30, the clutch release bearing 30 is relatively moved in the radial direction via the aligning spring 25 with respect to the diaphragm spring 40, so that the clutch release bearing 30 is aligned with the diaphragm spring 40.

As shown in Fig. 1, disposed between a spring receiving member 70 disposed along the flange member 60 and the external cylinder body 15 is a pressurizing spring 75 configured to press the clutch release bearing 30 toward the diaphragm spring 40 together with the cover member 50.

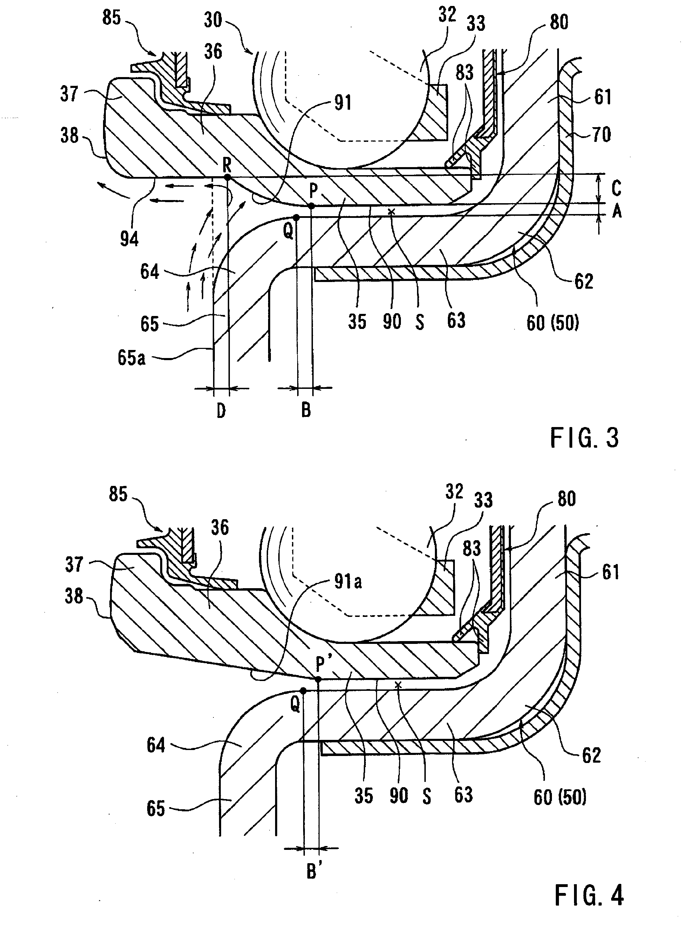

As shown in Fig. 3, a cylindrical peripheral wall surface 90 extending in parallel with the axial direction is formed on the inner peripheral surface of the inner ring 35 of the clutch release bearing 30 over a portion from one end side corresponding to the radially outside flange portion 61 of the cover member 50 to an end edge of the intermediate cylinder portion 63. In addition, a guiding surface 91 which is formed into a tapered shape and a curved shape (including an arcuate shape) so as to increase in diamter gradually from an end edge of the cylindrical peripheral wall surface 90 toward an inner peripheral surface of the extending cylinder portion 36 is formed into the inner peripheral surface of the inner ring 35. Then, the muddy water or the like flowing from the radially inside flange portion 65 side of the cover member 50 along the second bent portion 64 is guided toward the distal end side of the extending cylinder portion 36 of the inner ring 35 by the guiding surface 91.

Also, as shown in Fig. 3, a starting point P of the guiding surface 91 on the side of the cylindrical peripheral wall surface 90 of the inner peripheral surface of the inner ring 35 is preferably set at the same position as a bending starting point Q of the second bent portion 64 on the side of the intermediate cylinder portion 63 of the cover member (the flange member 60) 50, or on the back side thereof.

For example, a distance dimension B between the starting point P and the bending starting point Q is preferably set to a range from 0.0 mm to 2.0 mm.

Also, as shown in Fig. 3, another cylindrical peripheral wall surface 94 having a diameter larger than the cylindrical peripheral wall surface 90 of the inner ring 35 is formed on an inner peripheral surface of the extending cylinder portion 36. Then, the guiding surface 91 is continuously connecting the both cylindrical peripheral wall surfaces 90, 94. In addition, an end point R of the guiding surface 91, which is a boundary with respect to the guiding surface 94 of the extending cylinder portion 36, is preferably set at the same position as a side surface 65a of the radially inside flange portion 65 or on the back side thereof.

For example, a distance dimension D between the end point R and the side surface 65a of the radially inside flange portion 65 is preferably set to a range from 0.0 mm to 1.2 mm.

Also, a spacing dimension C between the cylindrical peripheral wall surface 90 of the inner ring 35 and the inner peripheral surface of the extending cylinder portion 36 is preferably set to a range from 0.9 mm to 1.3 mm.

Also, as shown in Fig. 2, both sealing members 80, 85 which seal the interior of the bearing are assembled to both end portions between the outer ring 31 and the inner ring 35 of the clutch release bearing 30.

Also, the sealing member 80 is formed at a radially outer end portion of the sealing member 80 to be assembled between an outer peripheral surface of one end portion of the inner ring 35 and an inner peripheral surface of one end portion of the outer ring 31 with a radially outside fixed portion 81 to be fixed into a groove on the inner peripheral surface of the one end side of the outer ring 31 in a resiliently compressed manner, and at a radially inner end portion with a seal lip 83 made up of a resilient member which comes into contact with or approaches the end surface and the outer peripheral surface of one end portion of the inner ring 35 in a bifurcated form.

The clutch release bearing apparatus according to Example 1 is configured as described above.

Therefore, when the hydraulic pressure is supplied into the cylinder space 16 on the basis of a press-down operation of a clutch pedal (not shown), the annular piston 20 is pressed outward.

Then, the radially inside flange portion 65 of the flange member 60 of the cover member 50 is pressed against the pressing surface 22 of an inner wall surface on one side of the annular groove 21 of the annular piston 20, so that the clutch release bearing 30 is moved axially leftward together with the cover member 50. Then, the radially inside portion 41 of the diaphragm spring 40 is pressed by the annular pressing portion 36 at an end portion of the inner ring 35 of the clutch release bearing 30, and a clutch, not shown, is activated (disconnected).

And now, during the travel of the vehicle, there is a case where muddy water or the like entered into the clutch housing is splashed around by the diaphragm spring 40 and the muddy water or the like flows from the side of the radially inside flange portion 65 of the cover member 50 along the second bent portion 64 (see arrows in Fig. 3).

The muddy water or the like flowed along the second bent portion 64 of the cover member 50 is guided by the guiding surface 91 on the inner peripheral surface of the inner ring 35 and flows toward the distal end side of the extending cylinder portion 36 of the inner ring 35. In particular, when the inner ring 35 is rotated, it is guided along the guiding surface 91 with an action of a centrifugal force thereof and flows quickly.

In other words, in cooperation of the second bent portion 64 of the cover member 50 and the guiding surface 91 of the inner ring 35, the muddy water or the like can be guided toward the distal end side of the extending cylinder portion 36 of the inner ring 35.

Consequently, the entry of the muddy water or the like into the annular space S set between the inner peripheral surface of the inner ring 35 and the intermediate cylinder portion 63 of the cover member 50 can be restrained, so that improvement of watertightness is achieved.

Also, in Example 1, the starting point P of the guiding surface 91 on the side of the cylindrical peripheral wall surface 90 of the inner peripheral surface of the inner ring 35 is set at the same position as the bending starting point Q of the second bent portion 64 on the side of the intermediate cylinder portion 63 of the cover member 50, or on the back side thereof Therefore, the muddy water or the like flowing along the second bent portion 64 of the cover member 50 can be desirably guided by the guiding surface 91 of the inner ring 35, and prevention of the entry of the muddy water or the like into the annular space S between the inner peripheral surface of the inner ring 35 and the intermediate cylinder portion 63 of the cover member 50 is effectively achieved.

Also, in Example 1, another cylindrical peripheral wall surface 94 having a diameter larger than the cylindrical peripheral wall surface 90 of the inner ring 35 is formed on the inner peripheral surface of the extending cylinder portion 36. Then, the guiding surface 91 is continuously connecting the both cylindrical peripheral wall surfaces 90, 94. In addition, the end point R of the guiding surface 91, which is a boundary with respect to the cylindrical peripheral wall surface 94 of the extending cylinder portion 36, is set at the same position as the side surface 65a of the radially inside flange portion 65 or on the back side thereof. Therefore, the muddy water or the like flowing along the side surface 65a of the radially inside flange portion 65 and reaching the inner peripheral surface of the inner ring 35 is guided desirably by the guiding surface 91 and flows toward the distal end side of the extending cylinder portion 36 of the inner ring 35 without being hindered by the guiding surface 91. Consequently, the entry of the muddy water or the like into the annular space S set between the inner peripheral surface of the inner ring 35 and the intermediate cylinder portion 63 can be restrained further desirably.

### Example 2

Subsequently, referring now to Fig. 4, Example 2 of the present invention will be described.

As shown in Fig. 4, in Example 2, a guiding surface 91a having a tapered shape formed continuously at a distal end of the cylindrical peripheral wall surface 90 of the inner peripheral surface of the inner ring 35 is formed to be inclined so as to gradually increase in diameter from an end edge of the cylindrical peripheral wall surface 90 to a distal end of the extending cylinder portion 36.

Then, the muddy water or the like flowing from the radially inside flange portion 65 side of the cover member 50 along the second bent portion 64 is guided toward the distal end side of the extending cylinder portion 36 of the inner ring 35 by the guiding surface 91a.

Also, as described also in Example 1, a starting point P' of the guiding surface 91a on the side of the cylindrical peripheral wall surface 90 of the inner peripheral surface of the inner ring 35 is preferably set at the same position as the bending starting point Q of the second bent portion 64 on the side of the intermediate cylinder portion 63 of the cover member (flange member 60,) 50 or on the back side thereof

In other words, a distance dimension B' between the starting point P' and the bending starting point Q is preferably set to a range from 0.0 mm to 2.0 mm.

Other configurations of Example 2 are the same as those in Example 1. Therefore, the same reference numerals are assigned to the same components, and description thereof is omitted.

Therefore, the same effects and advantages as those in Example 1 are achieved also in Example 2.

### Example 3

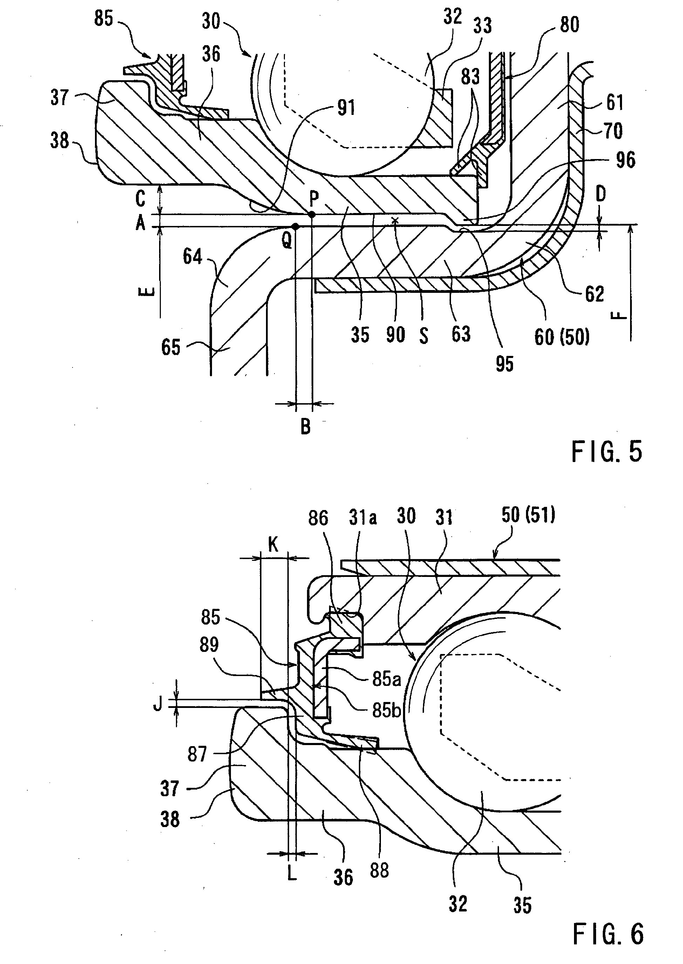

Subsequently, referring now to Fig. 5, Example 3 of the present invention will be described.

As shown in Fig. 5, a depressed portion 95 and a projecting portion 96 which constitute a non-contact seal portion by approaching each other are formed respectively between the inner peripheral surface of the inner ring 35 and an outer peripheral surface of the intermediate cylinder portion 63 of the cover member 50 which constitutes the annular space S.

Also, the projecting portion 96 has an inner diameter slightly larger than the outer diameter of the intermediate cylinder portion 63, and the depressed portion 95 is set to have dimensions to form a predetermined gap (the gap which functions as the non-contact seal portion) with respect to the inner diameter of the projecting portion 96.

In Example 3, as shown in Fig. 5, the annular projecting portion 96 is formed on an inner peripheral surface of the one end portion of the inner ring 35, and the annular depressed portion 95 is formed on the outer peripheral surface of one end portion of the intermediate cylinder portion 63 of the cover member 50.

Also, considering the assembleability between the inner ring 35 and the extending cylinder portion 36 of the cover member 50, an inner diameter dimension F of the projecting portion 96 is set to be larger than an outer diameter dimension E of the intermediate cylinder portion 63, even though it is a small extent.

In addition, the gap dimension between the radially inside surface of the projecting portion 96 and the radially outside surface of the depressed portion 95 is preferably set to a range from 0.05 mm to 0.25 mm (preferably, on the order of 0.15 mm).

Other configurations of Example 3 are the same as those in Example 1. Therefore, the same reference numerals are assigned to the same components, and description thereof is omitted.

Therefore, the same effects and advantages as those in Example 1 are achieved also in Example 3.

In particular, in Example 3, the depressed portion 95 and the projecting portion 96 which constitute the non-contact seal portion are formed respectively between the inner peripheral surface of the inner ring 35 and the outer peripheral surface of the intermediate cylinder portion 63 of the cover member 50. Therefore, granted that part of the muddy water or the like flowing from the radially inside flange portion 65 side of the cover member 50 along the second bent portion 64 enters the annular space S between the inner peripheral surface of the inner ring 35 and the outer peripheral surface of the intermediate cylinder portion 63 of the cover member 50, the muddy water or the like is stopped by the non-contact seal portion made up of the depressed portion 95 and the projecting portion 96 and further entry thereof can be prevented.

### Example 4

Subsequently, referring now to Fig. 6, Example 4 not falling under the scope of the present invention will be described.

In Example 4, a sealing member 85 to be assembled between an outer peripheral surface of the extending cylinder portion 36 of the inner ring 35 and an outer peripheral surface of one end portion of the outer ring 31, which is one of both sealing members to be assembled to both end portions between the outer ring 31 and the inner ring 35 of the clutch release bearing 30 as shown in Fig. 6, will be described in detail.

The sealing member 85 is provided at a radially outer end portion of the sealing member 85 with a radially outside fixed portion 86 to be fixed to the outer ring 31 and at a radially inner end portion thereof with a contact lip 88 which comes into resilient contact with an outer peripheral surface of the extending cylinder portion 36 of the inner ring 35.

Furthermore, the sealing member 85 is formed with a non-contact lip 89 which constitutes the non-contact seal portion in cooperation with the flange portion 37 of the inner ring 35.

Also, in Example 4, the sealing member 85 integrally includes a core metal 85a formed of a metal plate bent into an L-shape in vertical cross section, and a resilient member 85b formed of soft resin, rubber, or the like and formed so as to cover the core metal 85a.

Also, the resilient member 85b integrally includes the radially outside fixed portion 86 formed on the radially outer end portion of the sealing member 85, a coating layer 87 configured to cover an outside surface of the core metal 85a, the contact lip 88 as a first lip formed on the radially inner end portion of the sealing member 85, and the non-contact lip 89 as a second lip projecting axially from one side surface of the coating layer 87.

Then, the radially outside fixed portion 86 of the sealing member 85 is resiliently compressed and fixedly assembled by being press-fitted into an annular groove 31a formed on an inner peripheral surface of one end portion of the outer ring 31. In this assembled state, the contact lip 88 comes into resilient contact with the outer peripheral surface of the extending cylinder portion 36 of the inner ring 35, and the non-contact lip 89 approaches an outer peripheral surface of the flange portion 37 of the inner ring 35 and constitutes the non-contact seal portion in cooperation with the flange portion 37.

Also, in Example 4, a gap dimension J between the non-contact lip 89 and the outer peripheral surface of the flange portion 37 of the inner ring 35 is preferably set to a range from 0.05 mm to 0.25 mm. The applicant has confirmed that the practical effect is further desirable when the gap dimension J is set to a value on the order of 0.15. With this configuration, even when variations in manufacture or assembly of the sealing member 85 exist, the non-contact seal portion can be formed easily with respect to the outer peripheral surface of the flange portion 37 of the inner ring 35.

In other words, if the gap dimension J is set to be smaller than 0.05, it is assumed that the non-contact lip 89 comes into contact with the outer peripheral surface of the flange portion 37 of the inner ring 35 due to the variations in manufacture or assembly of the sealing member 85, and if the gap dimension J is set to be larger than 0.25 mm, the function as the non-contact seal portion is lowered. However, by setting the gap dimension J as described above, variations in manufacture or assembly of the sealing member 85 can be absorbed and the function as the non-contact seal portion is desirably achieved.

Also, in Example 4, as shown in Fig. 6, an overlapped amount K between the non-contact lip 89 and the outer peripheral surface of the flange portion 37 of the inner ring 35 is preferably set to a range from 0.28 mm to 1.12 mm. The applicant has confirmed that the practical effect is further desirable when the overlapped amount K is set to a value on the order of 0.6 mm. With this configuration, even when variations in manufacture or assembly of the sealing member 85 exist, the non-contact seal portion can be formed easily

In other words, the overlapped amount K is set to be smaller than 0.28 mm, the overlapped amount K is not sufficient due to the variations in manufacture or assembly of the sealing member 85 and hence the function as the non-contact seal portion is lowered, and if the overlapped amount K is set to be larger than 1.12 mm, it is assumed that the non-contact lip 89 is liable to be deformed inadvertently, and hence comes into contact with the outer peripheral surface of the flange portion 37 of the inner ring 35. However, by setting the overlapped amount K as described above, variations in manufacture or assembly of the sealing member 85 can be absorbed, and the function as the non-contact seal portion is desirably achieved.

Also, as shown in Fig. 6, one side surface of the coating layer 87 of the sealing member 85 is arranged in the vicinity of an inside surface of the flange portion 37 of the inner ring 35 opposing the one side surface, and a second non-contact seal portion continuing to the non-contact seal portion is formed at the corresponding portion.

In other words, in a state in which the sealing member 85 is assembled, a gap dimension L between the one side surface of the coating layer 87 and the inside surface of the flange portion 37 of the inner ring 35 is desirably set to a range from 0.10 mm to 0.25 mm.

Other configurations of Example 4 are the same as those in Example 1. Therefore, the same reference numerals are assigned to the same components, and description thereof is omitted.

Therefore, in the clutch release bearing apparatus according to Example 4 as well, the same effects and advantages as those in Example 1 are achieved.

In particular, in Example 4, the sealing member 85 to be assembled between the outer peripheral surface of the extending cylinder portion 36 of the inner ring 35 and the outer peripheral surface of the one end portion of the outer ring 31 is formed with the non-contact lip 89, and the non-contact seal portion is formed in cooperation with the flange portion 37 of the inner ring 35. Accordingly, even when the muddy water or the like entered into the clutch housing during the travel of a vehicle is splashed by the diaphragm spring, and enter toward the extending cylinder portion 36 of the inner ring 35, it is stopped by the non-contact seal portion in cooperation between the contact lip 89 of the sealing member 85 and the flange portion 37 of the inner ring 35, so that the entry thereof into the interior of the bearing is prevented.

Granted that part of the muddy water or the like has passed through the non-contact seal portion, it is stopped by the contact lip 88 which is in resilient contact with the outer peripheral surface of the extending cylinder portion 36 of the inner ring 35.

Consequently, the reduction of the torque loss is achieved by restraining a resilient press-contact force (interference) of the contact lip 88 with respect to the outer peripheral surface of the extending cylinder portion 36 of the inner ring 35, and improvement of the sealing properties (watertightness, dustproof resistant property, etc.) is achieved.

Also, in Example 4, the non-contact seal portion can be formed easily by bringing the non-contact lip 89 projecting axially from one side surface of the coating layer 87 of the sealing member 85 to the vicinity of the outer peripheral surface of the flange portion 37 of the inner ring 35.

Also, in Example 4, the second non-contact seal portion continuing in series with the non-contact seal portion configured with the non-contact lip 89 can be formed by arranging the one side surface of the coating layer 87 of the sealing member 85 to the vicinity of the inside surface of the flange portion 37 of the inner ring 35, so that further improvement of the watertightness and dustproof-resistant property is achieved.

The present invention is not limited to Examples 1 to 4, and may be implemented in various modes without departing the scope of the present invention.

For example, in the above-described Example 1, the case in which the cover member 50 is made up of two component, namely, the flange member 60 and the cylindrical body 51 has been described. However, the present invention can be implemented even when it is made up of one component.

Also, in the above-described Example 4, the case where the first lip of the sealing member 85 is the contact lip 88 and the second lip is the non-contact lip 89 has been described. However, the first lip and the second lip of the present invention are not limited to the contact lip, the non-contact lip.

### Reference Numerals

- 30: clutch release bearing
- 31: outer ring
- 32: ball (rolling body)
- 35: inner ring
- 36: extending cylinder portion
- 40: diaphragm spring
- 50: cover member
- 60: flange member
- 61: radially outside flange portion
- 63: intermediate cylinder portion
- 64: second bent portion (bent portion)
- 85: sealing member
- 86: radially outside fixed portion
- 88: contact lip (first lip)
- 89: non-contact lip (second lip)
- 90: cylindrical peripheral wall surface
- 91: guiding surface

## Claims

1. A clutch release bearing apparatus comprising: an outer ring (31), an inner ring (35), and a rolling body (32) disposed between the outer ring (31) and the inner ring (35), wherein
the outer ring (31) includes a radially outside flange portion (61) extending from one end surface of the outer ring (31) over one end of the inner ring (35) toward a radially center side, an intermediate cylinder portion (63) extending from a radially inner end of the radially outside flange portion (61) along the inner peripheral surface of the inner ring (35) within an annular space (S) set with respect to an inner peripheral surface of the inner ring (35), a bent portion (64) bent from an end edge of the intermediate cylinder portion (63) toward the radially center side at a predetermined radius of curvature, and a radially inside flange portion (65) extending from an end edge of the bent portion (64) toward the radially center side,
the inner ring (35) is formed with an extending cylinder portion (36) extending in an axial direction at the other end thereof, and
the inner ring (35) includes on the inner peripheral surface thereof a cylindrical peripheral wall surface (90) extending axially in parallel to a portion from one end side corresponding to the radially outside flange portion (61) to an end edge of the intermediate cylinder portion (63) and a guiding surface (91) formed into an inclined state or a curved state by being increased gradually in diameter from an end edge of the cylindrical peripheral wall surface (90) toward the extending cylinder portion (36) continuously to each other,
**characterized in that**
a gap dimension (A) of the annular space (S) is set to a range from 0,3 mm to 0,5 mm.

2. A clutch release bearing apparatus according to claim 1, further comprising
a center mounting portion arranged at a center portion of the radially inside flange portion (65) and assembled to a piston (20) of the clutch release bearing apparatus,
a cover member (50) forming an annular space in which an external cylinder (15) of the clutch release bearing apparatus can be arranged between the intermediate cylinder portion (63) and the piston (20).

3. The clutch release bearing apparatus according to Claim 1 or 2, wherein
a starting point (8) of the guiding surface (91) of the inner peripheral surface of the inner ring (35) on the side of the cylindrical peripheral wall surface (90) is set to the same position as a bending starting point (Q) of the bent portion (64) on the side of the intermediate cylinder portion (63) or on the back side thereof in the axial direction.

4. The clutch release bearing apparatus according to any one of Claims 1 to 3, wherein
another cylindrical peripheral wall surface (94) having a diameter larger than the cylindrical peripheral wall surface (90) of the inner ring (35) is formed on an inner peripheral surface of the extending end of the extending cylinder portion, and
the guiding surface (91) is continuously connecting the both cylindrical peripheral wall surfaces (90, 94), and an end point (R) of the guiding surface (91), which is a boundary between the guiding surface (91) and the another guiding surface, is positioned at the same position as a side surface of the radially inside flange portion (65) or on the back side thereof

5. The clutch release bearing apparatus according to any one of Claims 1 to 4, wherein
part of the cylindrical peripheral wall surface (90) of the inner ring (35) and part of the intermediate cylinder portion (63) opposing thereto are formed with a depression portion (95) and a projecting portion(96) which approach with respect to each other to form a non-contact seal portion.

6. The clutch release bearing apparatus according to Claim 5, wherein
the part of the cylindrical peripheral wall surface (90) of the inner ring (35) is formed with a projecting portion (96) having an inner diameter slightly larger than the outer diameter of the intermediate cylinder portion (63), and an outer peripheral surface of the intermediate cylinder portion (63) to which the projecting portion (96) opposes is formed with a depressed portion (95) at a gap (D) set with respect to the inner diameter of the projecting portion (96).

## Patentansprüche

1. Kupplungslösungslagervorrichtung mit: einem äußeren Ring (31), einem inneren Ring (35) und einem rollenden Körper (32), der zwischen dem äußeren Ring (31) und dem inneren Ring (35) vorgesehen ist, wobei
der äußere Ring (31) einen radial außen liegenden Flanschabschnitt (61), der sich von einer Endoberfläche des äußeren Rings (31) über ein Ende des inneren Rings (35) zu einer radialen Mittelseite hin erstreckt, einen Zwischenzylinderabschnitt (63), der sich von einem radial inneren Ende des radial außen liegenden Flanschabschnitts (61) entlang der inneren Randoberfläche des inneren Rings (35) innerhalb eines mit Bezug auf eine innere Randoberfläche des inneren Rings (35) eingestellten ringförmigen Raums (S) erstreckt, einen gebogenen Abschnitt (64), der von einer Endkante des Zwischenzylinderabschnitts (63) zu der radialen Mittelseite an einem bestimmten Krümmungsradius gebogen ist, und einen radial innen liegenden Flanschabschnitt (65), der sich von einer Endkante des gebogenen Abschnitts (64) zu der radialen Mittelseite hin erstreckt, hat,
wobei der innere Ring (35) mit einem sich erstreckenden Zylinderabschnitt (36) ausgebildet ist, der sich in einer axialen Richtung an dem anderen Ende davon erstreckt, und
der innere Ring (35) an der inneren Randoberfläche davon eine zylindrische Randwandoberfläche (90) hat, die sich axial parallel zu einem Abschnitt von einer Endseite entsprechend dem radial außen liegenden Flanschabschnitt (61) zu einer Endkante des Zwischenzylinderabschnitts (63) erstreckt, und eine Führungsoberfläche (91), die in einem geneigten Zustand oder einem gekrümmten Zustand ausgebildet ist, indem sie allmählich im Durchmesser von einer Endkante der zylindrischen Wandoberfläche (90) zu dem sich erstreckenden Zylinderabschnitt (36) kontinuierlich zueinander erhöht wird,
**dadurch gekennzeichnet, dass**
eine Spaltabmessung (A) des ringförmigen Raums (S) in einem Bereich von 0,3 mm bis 0,5 mm eingestellt ist.

2. Kupplungslösungslagervorrichtung nach Anspruch 1, außerdem mit
einem Mittelmontageabschnitt, der an einem Mittelabschnitt des radial innen liegenden Flanschabschnitts (65) angeordnet und zu einem Kolben (20) des Kupplungslösungslagermechanismus zusammengebaut ist,
ein Abdeckelement (50), das einen ringförmigen Raum ausbildet, in dem ein äußerer Zylinder (15) der Kupplungslösungslagervorrichtung zwischen dem Zwischenzylinderabschnitt (63) und dem Kolben (20) angewendet werden kann.

3. Kupplungslösungslagervorrichtung nach Anspruch 1 oder 2, wobei
ein Startpunkt (8) der Führungsoberfläche (91) der inneren Randoberfläche des inneren Rings (35) an der Seite der zylindrischen Randwandoberfläche (90) auf die gleiche Position wie ein Biegungsstartpunkt (Q) des gebogenen Abschnitts (64) an der Seite des Zwischenzylinderabschnitts (63) oder an der Rückseite davon in der axialen Richtung eingestellt ist.

4. Kupplungslösungslagervorrichtung nach einem der Ansprüche 1 bis 3, wobei
eine andere zylindrische Randwandoberfläche (94), die einen Durchmesser aufweist, der größer als der der zylindrischen Wandrandoberfläche (90) des inneren Rings (35) ist, an einer inneren Randoberfläche des sich erstreckenden Endes des sich erstreckenden Zylinderabschnitts ausgebildet ist, und
die Führungsoberfläche (91) kontinuierlich die beiden zylindrischen Randwandoberflächen (90, 94) verbindet, und ein Endpunkt (R) der Führungsoberfläche (91), der eine Grenze zwischen der Führungsoberfläche (91) und der anderen Führungsoberfläche ist, an der gleichen Position wie eine Seitenoberfläche des radial innen liegenden Flanschabschnitts (65) oder an dessen Rückseite positioniert ist.

5. Kupplungslösungslagervorrichtung nach einem der Ansprüche 1 bis 4, wobei
ein Teil der zylindrischen Randwandoberfläche (90) des inneren Rings (35) und ein Teil des Zwischenzylinderabschnitts (63) gegenüber dazu mit einem vertieften Abschnitts (95) und einem vorspringenden Abschnitt (96) ausgebildet sind, die sich einander mit Bezug aufeinander annähern, um einen berührungslosen Dichtabschnitt auszubilden.

6. Kupplungslösungslagervorrichtung nach Anspruch 5, wobei
das Teil der zylindrischen Randwandoberfläche (90) des inneren Rings (35) mit einem vorspringenden Abschnitt (96) ausgebildet ist, der einen inneren Durchmesser geringfügig größer als der äußere Durchmesser des Zwischenzylinderabschnitts (63) aufweist, und eine äußere Randoberfläche des Zwischenzylinderabschnitts (63), der der vorspringende Abschnitt (96) gegenüberliegt, mit einem vertieften Abschnitt (95) an einem Spalt (D) ausgebildet ist, der mit Bezug auf den inneren Durchmesser des vorspringenden Abschnitts (96) eingestellt ist.

## Revendications

1. Appareil de butée de débrayage comprenant : une bague extérieure (31), une bague intérieure (35), et un corps roulant (32) disposé entre la bague extérieure (31) et la bague intérieure (35), dans lequel
la bague extérieure (31) comprend une partie de bride radialement externe (61) s'étendant à partir d'une surface d'extrémité de la bague extérieure (31) sur une extrémité de la bague intérieure (35) vers un côté radialement central, une partie cylindrique intermédiaire (63) s'étendant à partir d'une extrémité radialement intérieure de la partie de bride radialement externe (61) le long de la surface périphérique intérieure de la bague intérieure (35) à l'intérieur d'un espace annulaire (S) défini par rapport à une surface périphérique intérieure de la bague intérieure (35), une partie pliée (64) pliée à partir d'un bord d'extrémité de la partie cylindrique intermédiaire (63) vers le côté radialement central au niveau d'un rayon de courbure prédéterminé, et une partie de bride radialement interne (65) s'étendant à partir d'un bord d'extrémité de la partie pliée (64) vers le côté radialement central,
la bague intérieure (35) est formée d'une partie cylindrique d'extension (36) s'étendant dans une direction axiale au niveau de son autre extrémité, et
la bague intérieure (35) comporte sur sa surface périphérique intérieure une surface de paroi périphérique cylindrique (90) s'étendant axialement parallèlement à une partie à partir d'un côté d'extrémité correspondant à la partie de bride radialement externe (61) vers un bord d'extrémité de la partie cylindrique intermédiaire (63) et une surface de guidage (91) formée dans un état incliné ou un état incurvé par augmentation progressive de son diamètre à partir d'un bord d'extrémité de la surface de paroi périphérique cylindrique (90) vers la partie cylindrique d'extension (36) de manière continue l'une par rapport à l'autre,
**caractérisé en ce que**
une dimension d'écartement (A) de l'espace annulaire (S) est réglée dans une plage allant de 0,3 mm à 0,5 mm.

2. Appareil de butée de débrayage selon la revendication, comprenant en outre
une partie de montage centrale agencée au niveau d'une partie centrale de la partie de bride radialement interne (65) et assemblée à un piston (20) de l'appareil de butée de débrayage,
un élément de couverture (50) formant un espace annulaire dans lequel un cylindre externe (15) de l'appareil de butée de débrayage peut être agencé entre la partie cylindrique intermédiaire (63) et le piston (20).

3. Appareil de butée de débrayage selon la revendication 1 ou 2, dans lequel
un point de départ (P) de la surface de guidage (91) de la surface périphérique intérieure de la bague intérieure (35) sur le côté de la surface de paroi périphérique cylindrique (90) est défini à la même position qu'un point de départ de flexion (Q) de la partie pliée (64) sur le côté de la partie cylindrique intermédiaire (63) ou sur son côté arrière dans la direction axiale.

4. Appareil de butée de débrayage selon l'une quelconque des revendications 1 à 3, dans lequel
une autre surface de paroi périphérique cylindrique (94) ayant un diamètre plus grand que la surface de paroi périphérique cylindrique (90) de la bague intérieure (35) est formée sur une surface périphérique intérieure de l'extrémité d'extension de la partie cylindrique d'extension, et
la surface de guidage (91) relie de manière continue les deux surfaces de paroi périphérique cylindrique (90, 94), et un point de fin (R) de la surface de guidage (91), qui représente une limite entre la surface de guidage (91) et l'autre surface de guidage, est positionné à la même position qu'une surface latérale de la partie de bride radialement interne (65) ou sur son côté arrière.

5. Appareil de butée de débrayage selon l'une quelconque des revendications 1 à 4, dans lequel
une portion de la surface de paroi périphérique cylindrique (90) de la bague intérieure (35) et une portion de la partie cylindrique intermédiaire (63) opposée à celle-ci sont formées avec une partie en creux (95) et une partie en saillie (96) qui se rapprochent l'une de l'autre pour former une partie de joint d'étanchéité sans contact.

6. Appareil de butée de débrayage selon la revendication 5, dans lequel la portion de la surface de paroi périphérique cylindrique (90) de la bague intérieure (35) est formée avec une partie en saillie (96) ayant un diamètre intérieur légèrement plus grand que le diamètre extérieur de la partie cylindrique intermédiaire (63), et une surface périphérique extérieure de la partie cylindrique intermédiaire (63), à laquelle la partie en saillie (96) est opposée, est formée avec une partie en creux (95) au niveau d'un écartement (D) défini par rapport au diamètre intérieur de la partie en saillie (96).
